# FASCICULE DE BREVET EUROPEEN

(11) **EP 4 490 395 B1**
(45) Date de publication et mention de la délivrance du brevet: **21.05.2025**
(21) Numéro de dépôt: 23713721.1
(22) Date de dépôt: 09.03.2023
(51) Int. Cl.: F02C 7/22, F02C 3/22, F02C 9/40

(54) **DISPOSITIF AERONAUTIQUE DE DISTRIBUTION DE GAZ**
AERONAUTISCHE VORRICHTUNG ZUR VERTEILUNG VON GAS
AERONAUTICAL DEVICE FOR DISTRIBUTING GAS

(30) Priorité: 14.03.2022 FR 2202235
(43) Date de publication de la demande: 15.01.2025
(73) Titulaire: Aresia-Villeneuve, 92390 Villeneuve La Garenne (FR)
(72) Inventeur: SUTTER, Xavier, 92390 Villeneuve La Garenne (FR); BERTOLO, Jean-Christophe, 92390 Villeneuve La Garenne (FR); LEGRAND, Pascal, 92390 Villeneuve La Garenne (FR); PAUN, Florin-Calin, 92390 Villeneuve La Garenne (FR); WALKER, Nicolas, 92390 Villeneuve La Garenne (FR)
(74) Mandataire: Cabinet Netter
(86) Numéro de dépôt international: PCT/FR2023/050321
(87) Numéro de publication internationale: WO 2023/175261

(56) Documents cités:
- WO-A1-2014/105335
- WO-A1-2018/206511
- WO-A1-2019/102156
- WO-A1-2022/023648
- CN-B- 104 948 302

## Description

La présente invention concerne le domaine de l'aéronautique.

Depuis ses débuts, l'aéronautique a utilisé des moteurs à essence à haut indice d'octane. Après 1945, le développement du réacteur et de la turbine a conduit à l'utilisation du kérosène, dont la masse moléculaire est plus élevée que celle de l'essence, dont la densité énergétique est plus élevée, le rendement plus élevé et dont l'inflammabilité est inférieure. Le stockage de ces carburants est effectué généralement dans des réservoirs situés dans les ailes, dans la liaison fuselageaile ou dans la queue.

La tendance à la réduction des émissions de gaz carbonique a conduit à des moteurs consommant moins. Toutefois les gains sur les émissions de gaz carbonique s'amenuisent au fur et à mesure de la maturité de certaines technologies, notamment la vitesse en extrémité des pales des aubes. Il est apparu de plus en plus souhaitable d'introduire une rupture.

Ainsi sont apparus des projets d'avions à gaz. La combustion de gaz à chaîne carbonée courte ou inexistante le cas échéant avec de l'oxygène, est peu ou non polluante. Par contre, le stockage de gaz H2, O2 ou en C1 ou C2 en raison de la petite taille de la molécule de gaz est difficile et sujet à des risques de fuites.

Au sol, la conservation de l'hydrogène, du méthane, de l'éthane, de l'éthylène, de l'acétylène ou de l'oxygène est en général effectuée dans des enveloppes sous pression trop lourdes, trop volumineuses et contenant trop d'énergie potentielle de pression pour être embarquées à bord d'un aéronef ou dans des réservoirs cryogéniques soudés et/ou collés. La conservation cryogénique est limitée à une durée limitée proportionnelle au volume stocké.

Par ailleurs, le gaz stocké à l'état liquide n'est pas utilisable par un moteur à combustion interne ou externe ou une pile à combustible. La consommation finale nécessite du gaz dans une plage de température et une plage de pression spécifiées par le fabricant de l'organe consommateur.

Le besoin est apparu de conditionner le gaz au sein d'un aéronef pour sa consommation à bord. CN 10 4 948 302 B divulgue un aéronef de l'art antérieur.

L'invention propose un dispositif aéronautique de distribution de gaz dans un aéronef entre au moins une source de gaz liquéfié et au moins un organe consommateur de gaz. Le dispositif comprend au moins une première vanne, tout ou rien, commandée en sortie de chaque source de gaz liquéfié, un distributeur cryogénique relié à chaque première vanne commandée et alimenté en liquide, des deuxièmes vannes, tout ou rien, commandées, reliées au distributeur cryogénique, en parallèle, des réservoirs tampons biphasiques, alimentés en liquide, chacun par une desdites deuxièmes vannes commandées, et fournissant du gaz, des troisièmes vannes commandées, montées en sortie de chaque réservoir tampon, pour fournir du gaz, un détendeur monté en sortie des troisièmes vannes commandées, et un collecteur alimenté par le détendeur pour alimenter ledit au moins un organe consommateur. Grâce à l'invention, le dispositif aéronautique de distribution de gaz peut assurer à l'aéronef, par le volume contenu dans les réservoirs tampons, une autonomie nécessaire indépendemment de l'état de la source de gaz liquéfié. Les réservoirs tampons peuvent être prévus pour une pression de gaz de plusieurs centaines de bars, une pression de gaz choisie étant néanmoins fournie aux organes consommateurs.

A la différence du domaine spatial où une vanne cryogénique est utilisée une fois et n'a pas besoin d'être refermée, on prévoit des vannes refermables, par exemple des électrovannes.

Dans un mode de réalisation, le dispositif comprend des quatrièmes vannes commandées montées en sortie de chaque détendeur, pour fournir du gaz. Le ou les organes consommateurs, par exemple les propulseurs ou encore un auxiliaire pour la génération d'énergie électrique à bord, peut être alimenté à partir d'un seul des réservoirs tampons, n'importe lequel.

Dans un mode de réalisation, le dispositif comprend au moins un compresseur alimenté par au moins un des réservoirs tampons, et au moins une cinquième vanne commandée montée entre le compresseur et ledit réservoir tampon. Le réservoir tampon peut être vidé suffisamment de façon à accroître la quantité de gaz disponible pour les organes consommateurs et amener le réservoir tampon à une pression en fin de vidange inférieure à la pression courante dans le réservoir cryogénique désigné à ce moment pour le remplissage. La pression courante dans le réservoir cryogénique est égale à la pression dans le distributeur lorsque la première vanne correspondante est ouverte et, le cas échéant, les autres premières vannes fermées. Le remplissage du réservoir tampon en gaz est alors effectué par manœuvre de vanne cryogénique sous l'effet de la différence de pression. Se passer d'une pompe cryogénique permet un gain de masse et une réduction du risque d'incident.

Dans un mode de réalisation, le dispositif comprend une unité de commande commandant la au moins une première vanne commandée pour un remplissage séquentiel des réservoirs tampons par différence de pression et une vidange séquentielle des réservoirs tampons. Le fonctionnement séquentiel permet de rendre indépendant le nombre de réservoirs cryogéniques et le nombre de réservoirs tampons. Au moins un réservoir cryogénique est prévu. Au moins deux, préférablement trois, réservoirs tampons sont prévus.

Dans le cas de deux réservoirs tampons, l'un est en cours de vidange tandis que l'autre est en cours de remplissage ou de gazéification par réchauffement du gaz.

Dans le cas de trois ou plus réservoirs tampons, l'un est en cours de vidange tandis qu'un deuxième est en cours de remplissage et un troisième est en cours de gazéification par réchauffement du gazou déjà rempli de gaz à la pression prévue. La gazéification requiert une durée dépendante de la quantité de liquide amenée dans le réservoir tampon, de la température extérieure susceptible d'aller de -55°C en altitude à +60°C au sol et de la vitesse de l'aéronef, notamment. La durée de la gazéification et la quantité de liquide admise dans le réservoir tampon peuvent faire l'objet d'une prévision estimative.

Lors de la gazéification, si le réservoir tampon correspondant dépasse une pression maximale, alors l'unité de commande peut commander une commutation pour décharger le réservoir tampon en surpression et interrompre momentanément la vidange d'un autre réservoir tampon, puis reprendre le fonctionnement antérieur à la surpression détectée.

Dans un mode de réalisation, pour la vidange de l'un des réservoirs tampons, l'unité de commande commande les troisiémes vannes commandées pour un écoulement gazeux par différence de pression dans un premier temps, puis par actionnement d'un compresseur dans un deuxième temps jusqu'à l'obtention d'une pression dans ledit réservoir tampon inférieure à la pression existant dans le distributeur cryogénique. Le fonctionnement du compresseur est limité dans le temps, d'où une économie d'énergie.

Dans un mode de réalisation, la au moins une première vanne et les deuxièmes vannes sont cryogéniques. Les autres vannes sont traversées par du gaz à température moins basse, par exemple environ -55 °C en altitude.

Dans un mode de réalisation, le dispositif comprend un débitmètre est disposé en sortie de chaque source de gaz liquéfié. La mesure du débit de liquide permet de gérer le temps d'ouverture des premières et deuxièmes vannes et le dispositif de distribution pour fournir une quantité demandée.

Dans un mode de réalisation, des débitmètres supplémentaires sont avantageusement disposés en entrée des réservoirs tampons.

Dans un mode de réalisation, un ensemble comprend un dispositif décrit cidessus et au moins une source cryogénique unique de gaz liquéfié. L'un des réservoirs cryogéniques peut être en cours de vidange pour remplir un réservoir tampon tandis que le ou les autres réservoirs cryogéniques sont inactifs. En cas de surpression dans un réservoir cryogénique, on peut prévoir une vidange prioritaire vers le dispositif de distribution.

Dans un mode de réalisation, le procédé aéronautique de distribution de gaz dans un aéronef entre au moins une source de gaz liquéfié et au moins un organe consommateur de gaz, comprend une étape de remplissage en de gaz liquéfié d'un réservoir tampon par au moins une parmi au moins une première vanne, tout ou rien, commandées en sortie de chaque source de gaz liquéfié, un distributeur cryogénique relié à chaque première vanne commandée, alimenté en liquide par le distributeur cryogénique, une parmi des deuxièmes vannes, tout ou rien, commandées reliées au distributeur cryogénique en parallèle, ledit réservoir tampon étant relié à ladite deuxième vanne commandée ouverte et la ou les autres deuxièmes vannes commandées étant fermées, une troisième vanne commandée montées en sortie dudit réservoir tampon étant fermée, et une étape de vidange dudit réservoir tampon, ladite deuxième vanne commandée étant fermée et ladite troisième vanne commandée étant ouverte, le gaz s'écoulant par un détendeur monté en sortie de ladite troisième vanne commandée pour alimenter ledit au moins un organe consommateur. L'utilisation de vannes tout ou rien permet de piloter la quantité de liquide passée par la vanne par la durée d'ouverture.

Dans un mode de réalisation, en fonctionnement normal, un premier réservoir tampon est en cours de remplissage en liquide par équilibrage de pression par une des au moins une première vanne ouverte et la deuxième vanne correspondant audit premier réservoir tampon ouverte, la troisième vanne correspondant audit premier réservoir tampon étant fermée, tandis qu'un deuxième réservoir tampon est en cours de fourniture de gaz sous pression, la deuxième vanne correspondant audit deuxième réservoir tampon fermée, la troisième vanne correspondant audit premier réservoir tampon étant ouverte. Ce mode est adapté pour deux réservoirs tampons.

Dans un mode de réalisation, un troisième réservoir tampon est en cours de gazéification, la deuxième vanne correspondant audit troisième réservoir tampon étant fermée, la troisième vanne correspondant audit troisième réservoir tampon étant fermée. Ce mode est adapté pour trois ou plus réservoirs tampons.

Dans un mode de réalisation, l'étape de vidange dudit réservoir tampon comprend une sous-étape de vidange par un détendeur pour réduire la pression de gaz à la pression demandée par l'organe consommateur, puis une sous-étape de vidange assistée par une pompe pour amener la pression de gaz à la pression demandée par l'organe consommateur et amener la pression dans ledit réservoir tampon à la fin de la vidange à une valeur inférieure à la pression existant dans le distributeur cryogénique. Une vidange plus complète du réservoir tampon est obtenue.

Dans un mode de réalisation, la contenance des réservoirs tampons est calculée pour assurer une autonomie de vol à l'aéronef selon les normes en vigueur pour le cas d'un incident affectant la réserve d'énergie, notamment sur un réservoir tampon si deux réservoirs tampons sont présents, et sur deux réservoirs tampons si trois réservoirs tampons sont présents.

D'autres caractéristiques et avantages de l'invention apparaîtront à l'examen de la description détaillée ci-après, et des dessins annexés, sur lesquels :
[Fig.1] illustre de façon schématique un dispositif selon un aspect de l'invention à deux réservoirs cryogéniques et trois réservoirs tampons.
[Fig.2] illustre de façon schématique un dispositif selon un aspect de l'invention à un réservoir cryogénique et trois réservoirs tampons.
[Fig.3] illustre de façon schématique un dispositif selon un aspect de l'invention à un réservoir cryogénique et trois réservoirs tampons.
[Fig.4] illustre de façon schématique un dispositif selon un aspect de l'invention à deux réservoirs cryogéniques et trois réservoirs tampons.
[Fig.5] illustre de façon schématique un dispositif selon un aspect de l'invention à un réservoir cryogénique et deux réservoirs tampons.

Les dessins annexés pourront non seulement servir à compléter l'invention, mais aussi contribuer à sa définition, le cas échéant.

Le dispositif aéronautique de distribution de gaz est conçu pour être emporté par un aéronef : avion, drone, hélicoptère, etc.. Le dispositif aéronautique de distribution de gaz est alimenté en liquide et fournit du gaz sous une pression choisie. En d'autres termes, le carburant ou comburant est stocké à très basse température sous forme liquide dans un réservoir cryogénique. A titre de mode de réalisation, l'hydrogène gazeux à 0°C et 1 atmosphère est de masse volumique environ 800 fois plus faible que l'hydrogène liquide à -253°C, donc de volume environ 800 fois plus élevé. Un réservoir cryogénique est inapte à résister à des pressions élevées, notamment supérieures à 10 bars.

Le gaz stocké est choisi parmi hydrogène, méthane, éthane, l'éthylène, l'acétylène et oxygène.

Par ailleurs, les règles de maintenance aéronautique imposent de pouvoir démonter et réparer ou remplacer la plupart des pièces de l'avion. Ainsi, un aéronef est capable de se poser en un lieu quelconque - aérodrome pour un avion, aire de pose pour un hélicoptère - adapté à sa masse et à ses exigences pour l'atterrissage mais non pourvu d'équipements de maintenance spécifiques au modèle de l'aéronef. En cas d'avarie détectée, l'aéronef est configuré pour être réparé, de manière pérenne ou provisoire, ou démonté de façon à remplacer ou à réparer un composant défectueux, conformément aux manuels et documents du constructeur agréés par les autorités de sécurité aérienne. Il est souhaitable que le composant soit aisément accessible par un opérateur de maintenance. En cas de remplacement, il est souhaitable que le composant soit le plus petit possible pour une manutention et un acheminement aisé. En cas de réparation, il est souhaitable que le composant soit réparable par des outils et des procédés éprouvés et courants dans le domaine aéronautique.

Un aéronef fait l'objet de visites d'inspection journalières, hebdomadaires, etc, immobilisant l'aéronef pour une durée à l'inverse de la fréquence.

Le dispositif aéronautique de distribution de gaz est ainsi soumis à de telles exigences.

La Demanderesse a identifié un besoin de distribution de gaz à partir de réservoirs cryogéniques aéronautiques qu'ils soient liés à la structure de l'aéronef de manière structurale, installés dans l'aéronef ou portés par l'aéronef.

D'un autre point de vue, les avions sont actuellement soumis à une règle de distance maximale d'une piste d'atterissage exprimée en heures de vols selon la certification ETOPS. Cette distance dépend du type d'avion.

Souhaitant assurer une sécurité de haut niveau ainsi qu'une perception de cette sécurité par les utlisateurs, la Demanderesse a identifié le besoin de voler même en cas d'avarie de réservoir cryogénique nécessitant un relâchement dans l'atmosphère du gaz contenu.

Le dispositif aéronautique de stockage vise à satisfaire le besoin complexe ainsi analysé par la Demanderesse.

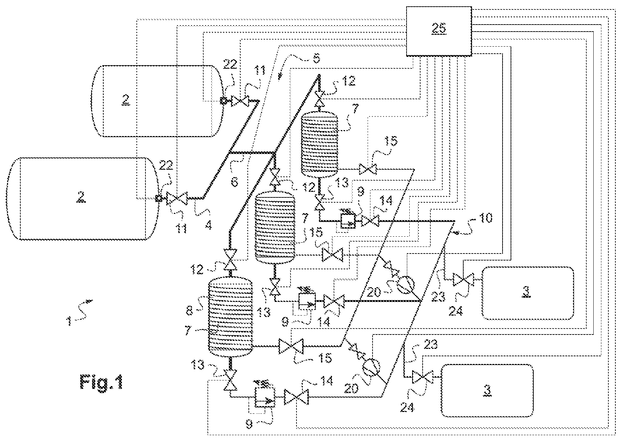

Comme illustré sur la figure 1, le dispositif aéronautique de distribution de gaz 1 embarqué dans un aéronef est alimenté par des sources de gaz liquéfié2 pour fournir en gaz un ou plusieurs organes consommateurs 3. Ici, deux organes consommateurs 3 ont été représentés, par exemple deux propulseurs, une génératrice d'énergie électrique ou un chauffage d'air. Un débitmètre 22 est disposé en sortie de chaque source de gaz liquéfié2.

Les sources de gaz liquéfié2 se composent de deux réservoirs cryogéniques disposés en parallèle. Chaque réservoir cryogénique est muni d'une conduite de sortie 4. Les termes amont et aval se réfèrent au sens d'écoulement du fluide, liquide puis gaz,en fonctionnement normal.

Chaque réservoir cryogénique est isolé pour contenir du gaz liquéfié, par exemple de l'hydrogène liquide à -253°C. Chaque réservoir cryogénique est capable de résister à une pression maximale de service de l'ordre de 6 à 10 bars.

Le dispositif aéronautique de distribution de gaz 1 comprend une première vanne 11 pour chaque réservoir cryogénique. La première vanne 11 est montée sur la conduite de sortie 4. Les premières vannes 11 sont pilotées avec une position ouverte et une position fermée. Les positions intermédiaires des premières vannes 11 sont dynamiques en ce sens que les premières vannes 11 sont en mouvement en passant dans ledites positions intermédiaires. En d'autres termes, les premières vannes 11 sont tout ou rien. Les premières vannes 11 peuvent être disposées immédiatement en aval des débitmètres 22. En option, les débitmètres 22 sont en aval des premières vannes 11.

Les premières vannes 11 débouchent dans un distributeur cryogénique 5. Le distributeur cryogénique 5 peut comprendre une conduite commune 6 reliant les sorties des premières vannes 11. Le distributeur est cryogénique en ce sens qu'il voit passer du gaz liquéfié.

Le distributeur cryogénique 5 comprend une pluralité de sorties, ici trois. Sur chacune desdites sorties sont montées des deuxièmes vannes 12. Les deuxièmes vannes 12 sont pilotées avec une position ouverte et une position fermée. Les positions intermédiaires des deuxièmes vannes 12 sont dynamiques en ce sens que les deuxièmes vannes 12 sont en mouvement en passant dans ledites positions intermédiaires. En d'autres termes, les deuxièmes vannes 12 sont tout ou rien. Les deuxièmes vannes 12 sont ici au nombre de trois.

En aval de chaque deuxième vanne 12 est monté un réservoir tampon 7. Trois réservoirs tampons 7 sont prévus dans ce mode de réalisation. Chaque réservoir tampon 7 sert également de gazéificateur. Une isolation peut être évitée. Chaque réservoir tampon 7 reçoit du liquide et fournit en aval du gaz. Une élévation de pression ou étape de gazéification se produit dans chaque réservoir tampon 7 entre le remplissage et la vidange. Chaque réservoir tampon 7 est capable de résister à une pression maximale de service de l'ordre de 300 à 1000 bars. Chaque réservoir tampon 7 est conçu pour fonctionner dans une plage de température allant de -253°C à +60°C. Les réservoirs tampons 7 sont biphasiques sur une partie des étapes de fonctionnement et monophasiques gazeux sur les autres étapes de fonctionnement. Chaque réservoir tampon 7 peut être équipé d'un organe de chauffage 8.

En aval de chaque réservoir tampon 7 est installé une troisième vanne 13 pour fournir du gaz et un détendeur 9 en aval de la troisième vanne 13. Le détendeur 9 écrête la pression pour fournir du gaz à une pression de consommation fixée par le fabricant de l'organe consommateur 3. Le détendeur 9 est actif lorsque la pression dans le réservoir tampon 7 est supérieure à la pression de consommation et inactif autrement. La pression de consommation est inférieure à la pression maximale du réservoir tampon 7. La pression de consommation est indépendante de la pression maximale des réservoirs cryogéniques. Les troisièmes vannes 13 sont tout ou rien.

En aval de chaque détendeur 9, peut être prévue une quatrième vanne 14 commandée. Les quatrièmes vannes 14 sont tout ou rien.

Les quatrièmes vannes 14 ou les détendeurs 9, selon l'option choisie, débouchent dans un collecteur 10. Le collecteur 10 peut comprendre une conduite reliant les sorties des quatrièmes vannes 14 ou des détendeurs 9. Le collecteur 10 voit passer du gaz. Le collecteur 10 est relié vers l'aval à des conduites d'alimentation 23 vers les organes consommateurs 3. En général, une conduite d'alimentation 23 est prévue pour chaque organe consommateur 3. Chaque conduite d'alimentation 23 peut être équipée d'une vanne d'alimentation 24 pilotée. La vanne d'alimentation 24 est à débit variable.

Le dispositif aéronautique de distribution de gaz 1 comprend au moins un compresseur 20 relié au collecteur 10. En général deux compresseurs 20 sont prévus en parallèle pour une redondance. Le compresseur 20 est électrique. Le compresseur 20 peut être équipé d'une vanne amont pilotée. Le compresseur 20 débite du gaz dans le collecteur 10. En particulier, le collecteur 10 est constitué d'une conduite en cas d'unique organe consommateur 3.

En aval de chaque réservoir tampon 7 est installé une cinquième vanne 15 pour fournir du gaz et un deuxième collecteur en aval des cinquièmes vannes 15. Le deuxième collecteur est relié au compresseur 20. Les cinquièmes vannes 15 permettent d'isoler les réservoirs tampons 7 et le compresseur 20. Les cinquièmes vannes 15 sont commandées. Les cinquièmes vannes 15 sont tout ou rien.

Le compresseur 20 augmente la pression pour fournir du gaz à une pression égale à une pression de consommation fixée par le fabricant de l'organe consommateur 3. La pression de consommation est inférieure à la pression maximale dans le réservoir tampon 7. Le compresseur 20 permet de prélever du gaz dans un réservoir tampon 7 dont la pression est inférieure à la pression de consommation pour alimenter le collecteur 10 et les organes consommateurs 3. Une vidange plus complète du réservoir tampon 7 permet d'augmenter l'autonomie fournie par le gaz contenu dans un réservoir tampon 7 ou de réduire le volume du réservoir tampon 7.

Une vidange du réservoir tampon 7 suffisante pour amener la pression interne du réservoir tampon 7 à une valeur inférieure à la pression dans un des réservoirs cryogéniques permet, lors du remplissage succédant à la vidange, de transférer le liquide du réservoir cryogénique vers le réservoir tampon 7 par différence de pression. Ainsi, le liquide du réservoir cryogénique est aspiré par le réservoir tampon 7 jusqu'à l'équilibre de pression. On peut se passer de pompe cryogénique, d'où un gain de masse et d'énergie consommée.

Le dispositif aéronautique de distribution de gaz 1 offre une combinaison d'états individuels de chaque réservoir cryogénique, de chaque réservoir tampon 7 et de chaque organe consommateur 3. Plusieurs organes consommateurs 3 peuvent être actifs simultanément. En mode normal, un réservoir cryogénique est en cours de vidange tandis que les autres sont inactifs donc fermés. Toutefois, dans certaines situations, par exemple pour diminuer la pression dans plusieurs réservoirs cryogéniques, un mode particulier peut être prévu dans lequel plusieurs réservoirs cryogéniques sont en cours de vidange. Les réservoirs tampons 7 présentent un mode de remplissage, un mode de gazéification, un mode de stockage gazeux et un mode de vidange.

Lorsque l'un des réservoirs cryogéniques est en cours de vidange, la première vanne 11 correspondante est ouverte et les autres premières vannes 11 sont fermées. Lorsque l'un des organes consommateurs 3 est en cours d'alimentation, la vanne d'alimentation 24 correspondante est ouverte.

Lorsque l'un des réservoirs tampons 7 est en mode de remplissage, la deuxième vanne 12 reliée audit réservoir tampon 7 est ouverte et au moins l'une des premières vannes 11 est ouverte. Les autres deuxièmes vannes 12 sont fermées sauf dans le cas où un remplissage simultané de deux réservoirs tampons 7 est exécuté. La troisième vanne 13 reliée audit réservoir tampon 7 est fermée. La cinduième vanne reliée audit réservoir tampon 7 est fermée.

Lorsque l'un des réservoirs tampons 7 est en mode de gazéification, la deuxième vanne 12 reliée audit réservoir tampon 7, la troisième vanne 13 reliée audit réservoir tampon 7 et la cinquième vanne 15 reliée audit réservoir tampon 7 sont fermées. Le mode de gazéification est de courte durée, en particulier en cas d'atmosphère ambiante chaude et/ou de chauffage du réservoir tampon 7.

Lorsque l'un des réservoirs tampons 7 est en mode de vidange, la deuxième vanne 12 reliée audit réservoir tampon 7 est fermée. En première partie de vidange, la pression dans le réservoir tampon 7 est supérieure à la pression de consommation. La troisième vanne 13 reliée audit réservoir tampon 7 est ouverte, la quatrième vanne 14 correspondante est ouverte et la cinduième vanne reliée audit réservoir tampon 7 est fermée. Le gaz subit une réduction de pression dans le détendeur 9 et est fourni au collecteur 10 à la pression de consommation. Le gaz est ensuite consommé par le ou les organes consommateurs 3.

A un instant donné, parmi trois réservoirs tampons 7, l'un est en mode de remplissage, un autre en mode de gazéification puis stockage et le troisième en mode de vidange. Comme les modes ont des durées différentes, on peut aussi trouver deux réservoirs tampons 7 en mode de remplissage et le troisième en mode de vidange ou l'inverse. On peut aussi trouver deux réservoirs tampons 7 en mode de stockage et le troisième en mode de vidange ou l'inverse.

Dans le mode de réalisation, un débitmètre 22 est disposé en sortie de chaque source de gaz liquéfié 2. Les débitmètres 22 permettent de connaître avec une précision suffisante, la quantité de liquide fournie à tel réservoir tampon 7.

Dans le mode de réalisation, le dispositif aéronautique de distribution de gaz 1 comprend une unité de commande 25 recevant une consigne extérieure par exemple provenant des organes consommateurs 3 ou d'une unité de commande centrale de l'aéronef, et des données de débit de liquide provenant des débitmètres 22. L'unité de commande 25 génère et envoie des consignes auxdites premières, deuxièmes, troisièmes, quatrièmes et cinquièmes vannes commandées et aux vannes d'alimentation 24 commandées. Les consignes peuvent être « ouvert » ou « fermé ». L'unité de commande 25 gère ladite combinaison d'états individuels.

En variante, les premières vannes 11 peuvent être remplacées par au moins une vanne multivoies possédant plusieurs entrées et une sortie. Dans ce cas, il est intéressant de prévoir une vanne multivoies à positions mixtes, notamment au moins une position de vidange simultanée de deux ou plus sources de gaz liquéfié 2 pour en réduire la pression en évitant une perte dans l'atmosphère.

En variante, les deuxièmes vannes 12 peuvent être remplacées par au moins une vanne multivoies possédant une entrée et plusieurs sorties, une par réservoir tampon 7. Ladite vanne multivoies forme un distributeur.

En variante, les détendeurs 9 sont remplacés par un détendeur 9 unique, les troisièmes vannes 13 débouchant dans le détendeur 9 unique. Dans ce cas, les troisièmes vannes 13 peuvent être remplacées par au moins une vanne multivoies possédant plusieurs entrées et une sortie vers le détendeur. Les quatrièmes vannes 14 sont alors remplacées par une seule quatrième vanne 14, le cas échéant non pilotée.

En variante, les cinquièmes vannes 15 peuvent être remplacées par au moins une vanne multivoies possédant plusieurs entrées, une par réservoir tampon 7, et une sortie vers le compresseur 20 ou les compresseurs 20. Ladite vanne multivoies forme un collecteur 10.

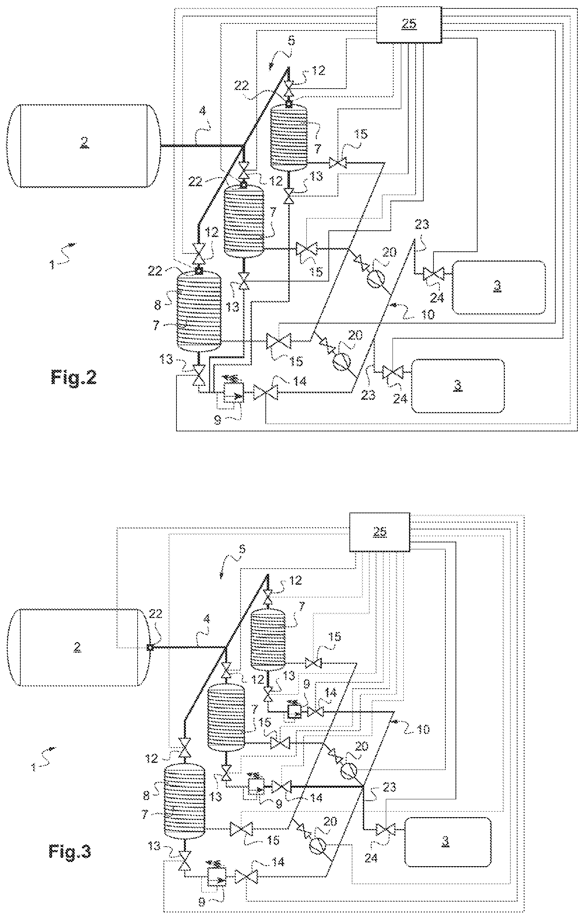

Dans le mode de réalisation représenté sur la figure 2, le dispositif est associé à une source de gaz liquéfié 2 pour remplir trois réservoirs tampons 7 alimentant deux organes consommateurs 3 de gaz. Les premières vannes 11 peuvent être omises en ce sens que les deuxièmes vannes 12 suffisent à diriger le flux de liquide de la source de gaz liquéfié 2 vers l'un des réservoirs tampons 7.

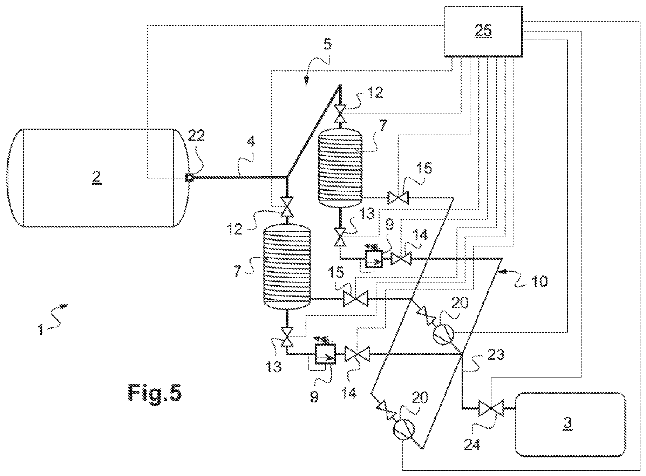

Par ailleurs, le détendeur 9 est unique. La quatrième vanne 14 est unique. Le détendeur 9 est relié à l'aval des troisièmes vannes 13, ici au nombre de trois pour recevoir du gaz à pression du réservoir tampon 7 dont la troisième vanne 13 associée est ouverte. Ceci est également adapté au cas de la figure 5 avec deux réservoirs tampons 7 au lieu de trois. Le détendeur 9 unique est aussi adapté aux autres modes de réalisation représentés quel que soient le nombre de sources de gaz liquéfié 2 et le nombre d' organes consommateurs 3.

Les débitmètres 22 sont disposés entre les deuxièmes vannes 12 et les réservoirs tampons 7. En option, les débitmètres 22 sont disposés en amont des deuxièmes vannes 12.

Les compresseurs 20 sont commandés à distance sans fil par l'unité de commande 25.

Dans le mode de réalisation représenté sur la figure 3, le dispositif est associé à une source de gaz liquéfié 2 pour remplir trois réservoirs tampons 7 alimentant un organe consommateur 3 de gaz, par exemple un propulseur. La première vanne 11 peut être omise pour les mêmes raisons que pour la figure 2. Le débitmètre 22 est disposé en sortie de la source de gaz liquéfié 2. La présence de trois réservoirs tampons 7 assure une autonomie importante à l'aéronef en cas de défaut de la source de gaz liquéfié 2, défaut pouvant nécessiter la vidange de la source de gaz liquéfié 2. De plus, trois réservoirs tampons 7 assurent une redondance en ce sens que le dispositif peut fonctionner de manière satisfaisante avec seulement deux réservoirs tampons 7. Le distributeur cryogénique 5 peut comprendre une vanne à une entrée et trois sorties, une par réservoir tampon 7. La vanne d'alimentation 24 associée à l'organe consommateur 3 peut être omise, notamment si les vannes associées aux compresseurs 20 sont pilotées.

Ce mode de réalisation est bien adapté à des aéronefs pourvus de deux ensembles comprenant chacun un dispositif aéronautique de distribution de gaz 1 et au moins une source cryogénique de gaz liquéfié. Chaque ensemble peut être monté de manière symétrique dans l'aéronef, par exemple dans les ailes, sous les ailes, etc.

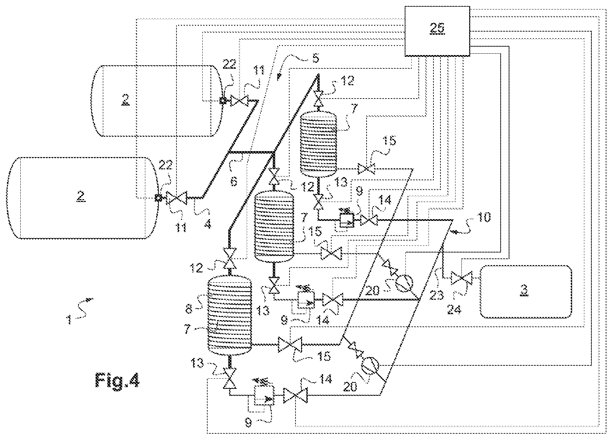

Dans le mode de réalisation représenté sur la figure 4, le dispositif est associé à deux sources de gaz liquéfié 2 pour remplir trois réservoirs tampons 7 alimentant un organe consommateur 3 de gaz.

Dans le mode de réalisation représenté sur la figure 5, le dispositif est associé à une source de gaz liquéfié 2 pour remplir deux réservoirs tampons 7 alimentant un organe consommateur 3 de gaz. La première vanne 11 peut être omise pour les mêmes raisons que pour la figure 2. Le fonctionnement est alors adapté. La durée de la phase de gazéification peut être réduite, notamment par un organe de chauffage 8 pour chaque réservoir tampon 7 ou pour les réservoirs tampons 7. Par ailleurs, l'un des réservoirs tampons 7 se vide par la troisième vanne 13 puis par la cinquième vanne 15 pendant que l'autre des réservoirs tampons 7 se remplit en liquide puis est en phase de gazéification. L'instant de commutation entre la troisième vanne 13 et la cinquième vanne 15 est indépendant de l'instant de fermeture de la deuxième vanne 12.

De manière générale, le nombre X de réservoirs cryogéniques, le nombre Y de réservoirs tampons 7 et le nombre Z de consommateurs sont indépendants, avec X≥1 ; Y≥2 ; Z≥1.

La capacité en volume de chaque réservoir tampon 7 est compris entre 10 et 20% de la capacité en volume de chaque source de gaz liquéfié 2.

Les réservoirs cryogéniques 2 étant sujet à une évaporation de gaz liquéfié, il peut être prévu un circuit de collecte de gaz dans une partie supérieure des réservoirs cryogéniques 2. Le circuit de collecte peut être actif au-dessus d'une pression seuil par une soupape à pression étalonnée. Le circuit de collecte comprend un compresseur pour réinjecter le gaz en aval, par exemple entre les cinquièmes vannes 15 et le compresseur 20.

En option des débitmètres supplémentaires sont disposés en entrée de chaque réservoir tampon. Une redondance de la mesure de débit de liqude est assurée.

Les premières vannes 11 peuvent être monostables ou bistables. Les premières vannes 11 peuvent être commandées en ouverture de durée correspondant à un remplissage d'un des réservoirs tampons 7, ou en modulation de largeur d'impulsions. Les deuxièmes vannes 12 peuvent être monostables ou bistables. Les deuxièmes vannes 12 peuvent être peuvent être commandées en ouverture de durée correspondant à un remplissage d'un des réservoirs tampons 7, ou en modulation de largeur d'impulsions.

## Revendications

1. Dispositif aéronautique de distribution de gaz (1) dans un aéronef entre au moins une source de gaz liquéfié (2) et au moins un organe consommateur (3) de gaz, comprenant
au moins une première vanne (11), tout ou rien, commandée en sortie de chaque source de gaz liquéfié (2),
un distributeur cryogénique (5) relié à chaque première vanne (11) commandée, et alimenté en liquide,
des deuxièmes vannes (12), tout ou rien, commandées, reliées au distributeur cryogénique (5), en parallèle,
des réservoirs tampons (7) biphasiques, alimentés en liquide, chacun par une desdites deuxièmes vannes (12) commandées, et fournissant du gaz,
des troisièmes vannes (13) commandées, montées en sortie de chaque réservoir tampon (7), pour fournir du gaz,
un détendeur (9) monté en sortie des troisièmes vannes (13) commandées, un collecteur (10) alimenté par le détendeur (9) pour alimenter ledit au moins un organe consommateur (3).

2. Dispositif selon la revendication 1, comprenant des quatrièmes vannes (14) commandées montées en sortie de chaque détendeur (9), pour fournir du gaz.

3. Dispositif selon l'une des revendications précédentes, comprenant au moins un compresseur (20) alimenté par au moins un des réservoirs tampons (7), et au moins une cinquième vanne (15) commandée montée entre le compresseur (20) et ledit réservoir tampon (7).

4. Dispositif selon l'une des revendications précédentes, comprenant une unité de commande commandant la au moins une première vanne (11) commandée pour un remplissage séquentiel des réservoirs tampons (7) par différence de pression et une vidange séquentielle des réservoirs tampons (7).

5. Dispositif selon la revendication 3 ou 4, dans lequel pour la vidange de l'un des réservoirs tampons (7), l'unité de commande commande les troisiémes vannes commandées pour un écoulement gazeux par différencede pression dans un premier temps, puis par actionnement d'un compresseur (20) dans un deuxième temps jusqu'à l'obtention d'une pression dans ledit réservoir tampon (7) inférieure à la pression existant dans le distributeur cryogénique (5).

6. Dispositif selon l'une des revendications précédentes, dans lequel la au moins une première vanne (11) et les deuxièmes vannes (12) sont cryogéniques et
dans lequel un débitmètre (22) est disposé en sortie de chaque source de gaz liquéfié (2), des débitmètres supplémentaires étant avantageusement disposés en entrée des réservoirs tampons (7).

7. Ensemble comprenant un dispositif selon l'une des revendications précédentes, et au moins une source cryogénique unique de gaz liquéfié.

8. Procédé aéronautique de distribution de gaz dans un aéronef entre au moins une source de gaz liquéfié (2) et au moins un organe consommateur (3) de gaz, comprenant
une étape de remplissage en de gaz liquéfié d'un réservoir tampon (7) parmi au moins deux réservoirs tampons (7), par au moins une parmi au moins une première vanne (11), tout ou rien, commandées en sortie de chaque source de gaz liquéfié (2), un distributeur cryogénique (5) relié à chaque première vanne (11) commandée, alimenté en liquide par le distributeur cryogénique (5), une parmi des deuxièmes vannes (12), tout ou rien, commandées reliées au distributeur cryogénique (5) en parallèle, ledit réservoir tampon (7) étant relié à ladite deuxième vanne (12) commandée ouverte et la ou les autres deuxièmes vannes (12) commandées étant fermées, une troisième vanne (13) commandée montées en sortie dudit réservoir tampon (7) étant fermée, et une étape de vidange dudit réservoir tampon (7), ladite deuxième vanne (12) commandée étant fermée et ladite troisième vanne (13) commandée étant ouverte, le gaz s'écoulant par un détendeur (9) monté en sortie de ladite troisième vanne (13) commandée pour alimenter ledit au moins un organe consommateur (3).

9. Procédé selon la revendication 8, dans lequel, en fonctionnement normal, un premier réservoir tampon (7) est en cours de remplissage en liquide par équilibrage de pression par une des au moins une première vanne (11) ouverte et la deuxième vanne (12) correspondant audit premier réservoir tampon (7) ouverte, la troisième vanne (13) correspondant audit premier réservoir tampon (7) étant fermée, tandis qu'un deuxième réservoir tampon (7) est en cours de fourniture de gaz sous pression, la deuxième vanne (12) correspondant audit deuxième réservoir tampon (7) fermée, la troisième vanne (13) correspondant audit premier réservoir tampon (7) étant ouverte, et
un troisième réservoir tampon (7) est en cours de gazéification, la deuxième vanne (12) correspondant audit troisième réservoir tampon (7) étant fermée, la troisième vanne (13) correspondant audit troisième réservoir tampon (7) étant fermée.

10. Procédé selon la revendication 8 ou 9, dans lequel l'étape de vidange dudit réservoir tampon (7) comprend une sous-étape de vidange par un détendeur (9) pour réduire la pression de gaz à la pression demandée par l'organe consommateur (3), puis une sous-étape de vidange assistée par une pompe pour amener la pression de gaz à la pression demandée par l'organe consommateur (3) et amener la pression dans ledit réservoir tampon (7) à la fin de la vidange à une valeur inférieure à la pression existant dans le distributeur cryogénique (5).

## Patentansprüche

1. Luftfahrttechnische Gasverteilungsvorrichtung (1) in einem Luftfahrzeug zwischen mindestens einer Flüssiggasquelle (2) und mindestens einem Gasverbraucherelement (3), umfassend
mindestens ein erstes Auf/Zu-Ventil (11), das am Ausgang jeder Flüssiggasquelle (2) gesteuert wird,
einen Kryoverteiler (5), der mit jedem ersten gesteuerten Ventil (11) verbunden ist und mit Flüssigkeit versorgt wird,
zweite gesteuerte Auf/Zu-Ventile (12), die parallel mit dem Kryoverteiler (5) verbunden sind,
zweiphasige Puffertanks (7), die jeweils über eines der zweiten gesteuerten Ventile (12) mit Flüssigkeit versorgt werden und Gas liefern,
dritte gesteuerte Ventile (13), die am Ausgang jedes Puffertanks (7) montiert sind, um Gas zu liefern,
ein Druckminderer (9), der am Ausgang der dritten gesteuerten Ventile (13) montiert ist,
einen Verteiler (10), der vom Druckminderer (9) versorgt wird, um das mindestens eine Verbraucherelement (3) zu versorgen.

2. Vorrichtung nach Anspruch 1, die vierte gesteuerte Ventile (14) umfasst, die am Ausgang jedes Druckminderers (9) montiert sind, um Gas zu liefern.

3. Vorrichtung nach einem der vorhergehenden Ansprüche, die mindestens einen Kompressor (20), der von mindestens einem der Puffertank (7) versorgt wird, und mindestens ein fünftes gesteuertes Ventil (15) umfasst, das zwischen dem Kompressor (20) und dem Puffertank (7) montiert ist.

4. Vorrichtung nach einem der vorhergehenden Ansprüche, die eine Steuereinheit umfasst, die das mindestens eine erste gesteuerte Ventil (11) für ein sequenzielles Befüllen des Puffertanks (7) durch Druckdifferenz und ein sequenzielles Entleeren des Puffertanks (7) steuert.

5. Vorrichtung nach Anspruch 3 oder 4, wobei die Steuereinheit zum Entleeren eines der Puffertanks (7) die dritten gesteuerten Ventile für einen Gasfluss durch Druckdifferenz in einem ersten Schritt und dann durch Betätigen eines Kompressors (20) in einem zweiten Schritt steuert, bis ein Druck in dem Puffertank (7) erreicht ist, der niedriger ist als der im Kryoverteiler (5) vorhandene Druck.

6. Vorrichtung nach einem der vorhergehenden Ansprüche, wobei das mindestens eine Ventil (11) und die zweiten Ventile (12) kryogen sind, und
wobei am Ausgang jeder Flüssiggasquelle (2) ein Durchflussmesser (22) angeordnet ist, wobei vorteilhafterweise zusätzliche Durchflussmesser am Eingang der Puffertanks (7) angeordnet sind.

7. Baugruppe, die eine Vorrichtung nach einem der vorhergehenden Ansprüche und mindestens eine einzige kryogene Flüssiggasquelle umfasst.

8. Luftfahrttechnisches Verfahren zur Gasverteilung in einem Luftfahrzeug zwischen mindestens einer Flüssiggasquelle (2) und mindestens einem Gasverbraucherelement (3), umfassend
einen Schritt des Befüllens eines Puffertanks (7) von mindestens zwei Puffertanks (7) mit Flüssiggas durch mindestens eines von mindestens einem ersten Auf/Zu-Ventil (11), das am Ausgang jeder Flüssiggasquelle (2) gesteuert wird, einen Kryoverteiler (5), der mit jedem ersten gesteuerten Ventil (11) verbunden ist, das vom Kryoverteiler (5) mit Flüssigkeit versorgt wird, eines der zweiten gesteuerten Auf/Zu-Ventile (12), die parallel mit dem Kryoverteiler (5) verbunden sind, wobei der Puffertank (7) mit dem zweiten gesteuerten Ventil (12) verbunden ist, das offen ist, und das oder die anderen zweiten gesteuerten Ventile (12) geschlossen sind, wobei ein drittes gesteuertes Ventil (13), das am Ausgang des Puffertanks (7) montiert ist, geschlossen ist, und
einen Schritt des Entleerens des Puffertanks (7), wobei das zweite gesteuerte Ventil (12) geschlossen ist und das dritte gesteuerte Ventil (13) offen ist, wobei das Gas durch einen Druckminderer (9) fließt, der am Ausgang des dritten gesteuerten Ventils (13) montiert ist, um das mindestens eine Verbraucherelement (3) zu versorgen.

9. Verfahren nach Anspruch 8, wobei im Normalbetrieb ein erster Puffertank (7) durch Druckausgleich mit Flüssigkeit gefüllt wird, indem eines von dem mindestens einen offenen ersten Ventil (11) und dem zweiten Ventil (12), das dem ersten Puffertank (7) entspricht, geöffnet wird, wobei das dritte Ventil (13), das dem ersten Puffertank (7) entspricht, geschlossen ist, während ein zweiter Puffertank (7) mit Druckgas versorgt wird, wobei das zweite Ventil (12), das dem zweiten Puffertank (7) entspricht, geschlossen ist, wobei das dritte Ventil (13), das dem ersten Puffertank (7) entspricht, offen ist, und
ein dritter Puffertank (7) gerade vergast wird, wobei das zweite Ventil (12), das dem dritten Puffertank (7) entspricht, geschlossen ist, wobei das dritte Ventil (13), das dem dritten Puffertank (7) entspricht, geschlossen ist.

10. Verfahren nach Anspruch 8 oder 9, wobei der Schritt des Entleerens des Puffertanks (7) einen Unterschritt des Entleerens durch einen Druckminderer (9) umfasst, um den Gasdruck auf den von dem Verbraucherelement (3) angeforderten Druck zu reduzieren, und dann einen Unterschritt des Entleerens mit Hilfe einer Pumpe, um den Gasdruck auf den von dem Verbraucherelement (3) angeforderten Druck zu bringen und den Druck in den Puffertank (7) am Ende des Entleerens auf einen Wert unterhalb des im Kryoverteiler (5) vorhandenen Drucks zu bringen.

## Claims

1. Aeronautical device (1) for distributing gas in an aircraft between at least one source of liquefied gas (2) and at least one gas-consumer member (3), comprising
at least one first controlled all-or-nothing valve (11) at the output of each source of liquefied gas (2),
a cryogenic distributor (5) connected to each first controlled valve (11), and supplied with liquid,
second controlled all-or-nothing valves (12) connected to the cryogenic distributor (5) in parallel,
two-phase buffer reservoirs (7), supplied with liquid, each by one of said second controlled valves (12), and supplying gas,
third controlled valves (13), mounted at the output of each buffer reservoir (7), for supplying gas,
a pressure-reducing valve (9) mounted at the output of the third controlled valves (13),
a collector (10) supplied by the pressure-reducing valve (9) to supply said at least one consumer member (3).

2. Device according to claim 1, comprising fourth controlled valves (40) mounted at the output of each pressure-reducing valve (9), for supplying gas.

3. Device according to one of the preceding claims, comprising at least one compressor (20) supplied by at least one of the buffer reservoirs (7), and at least one fifth controlled valve (15) mounted between the compressor (20) and said buffer reservoir (7).

4. Device according to one of the preceding claims, comprising a control unit controlling the at least one first controlled valve (11) for sequential filling of the buffer reservoirs (7) by pressure difference and sequential emptying of the buffer reservoirs (7).

5. Device according to claim 3 or 4, wherein, for emptying one of the buffer reservoirs (7), the control unit controls the third controlled valves for gaseous flow by pressure difference initially, then secondly by actuating a compressor (20) and until a pressure is obtained in said buffer reservoir (7) lower than the pressure existing in the cryogenic distributor (5).

6. Device according to one of the preceding claims, wherein the at least one first valve (11) and the second valves (12) are cryogenic and wherein a flow meter (22) is disposed at the output of each source of liquefied gas (2), additional flow meters advantageously being disposed at the input of the buffer reservoirs (7).

7. Assembly comprising a device according to one of the preceding claims, and at least one single cryogenic source of liquefied gas.

8. Aeronautical method for distributing gas in an aircraft between at least one source of liquefied gas (2) and at least one gas-consumer member (3), comprising
a step of filling with liquefied gas one buffer reservoir (7) from at least two buffer reservoirs (7), via at least one from at least one first controlled all-or-nothing valve (11), at the output of each source of liquefied gas (2), a cryogenic distributor (5) connected to each first controlled valve (11), supplied with liquid by the cryogenic distributor (5), one from the second controlled all-or-nothing valves (12), connected to the cryogenic distributor (5) in parallel, said buffer reservoir (7) being connected to said open second controlled valve (12) and the other second controlled valves (12) being closed, a third controlled valve (13) mounted at the output of said buffer reservoir (7) being closed, and
a step of emptying said buffer reservoir (7), said second controlled valve (12) being closed and said third controlled valve (13) being open, the gas flowing via a pressure-reducing valve (9) mounted at the output of said third controlled valve (13) for supplying said at least one consumer member (3).

9. Method according to claim 8, wherein, in normal operation, a first buffer reservoir (7) is in the process of being filled with liquid by pressure balancing via one of the at least one open first valve (11) and the second valve (12) corresponding to said open first buffer reservoir (7), the third valve (13) corresponding to said first buffer reservoir (7) being closed, while a second buffer reservoir (7) is in the process of supplying pressurised gas, the second valve (12) corresponding to said closed second buffer reservoir (7), the third valve (13) corresponding to said first buffer reservoir (7) being open, and
a third buffer reservoir (7) is in the process of gasification, the second valve (12) corresponding to said third buffer reservoir (7) being closed, the third valve (13) corresponding to said third buffer reservoir (7) being closed.

10. Method according to claim 8 or 9, wherein the step of emptying said buffer reservoir (7) comprises a substep of emptying by a pressure-reducing valve (9) to reduce the gas pressure to the pressure required by the consumer member (3), then a substep of pump-assisted emptying to bring the gas pressure to the pressure required by the consumer member (3) and to bring the pressure in said buffer reservoir (7) at the end of emptying to a value lower than the pressure existing in the cryogenic distributor (5).
